# EUROPEAN PATENT SPECIFICATION

(11) **EP 3 472 105 B1**
(45) Date of publication and mention of the grant of the patent: **23.03.2022**
(21) Application number: 17737893.2
(22) Date of filing: 16.06.2017
(51) Int. Cl.: C02F 1/32, C01B 13/11, C02F 1/78

(54) **METHOD FOR TREATING AGRICULTURAL PROCESS WATER**
VERFAHREN ZUR AUFBEREITUNG VON LANDWIRTSCHAFTLICHEM PROZESSWASSER
PROCÉDÉ DE TRAITEMENT D'EAU DE TRAITEMENT AGRICOLE

(30) Priority: 16.06.2016 NL 2016981
(43) Date of publication of application: 24.04.2019
(73) Proprietor: Plantlab Groep B.V., 5222 AE 's-Hertogenbosch (NL)
(72) Inventor: KERS, Martinus, 4007 RP Tiel (NL)
(74) Representative: Jilderda, Anne Ayolt
(86) International application number: PCT/NL2017/050402
(87) International publication number: WO 2017/217854

(56) References cited:
- EP-A1- 1 234 802
- CN-B- 103 535 247
- US-A1- 2003 019 150
- US-A1- 2004 226 893
- US-A1- 2014 263 098

## Description

The present invention relates to a method for treating agricultural process water, wherein said process water is drained from an agricultural installation, wherein said drained process water is exposed during a residence time to an excess of an oxidizing reaction gas in the form of colloidal bubbles that are introduced into said process water for the purpose of decomposing waste products present therein.

The term process water should be broadly interpreted here in the sense that it should be understood to mean any form of contaminated water subjected to the process or the installation according to the invention in order to wholly, largely or partially remove at least one contaminant therefrom. Particularly relevant here are discharge water or circulation water at agricultural or (glass) horticulture premises.

Water purification is an essential element of modern society in limiting the impact on the environment resulting from drainage of wastewater into surface water. In addition, water purification is a way of significantly limiting net consumption of clean drinking water and/or surface water in process industry and agriculture and horticulture. This latter is important not only from an environmental viewpoint but moreover provides significant economic advantages. It is noted here that where reference is made in the present application to process water, this is understood to mean discharge water from industry and/or agriculture and horticulture as well as for instance sewage water such as from households.

The skilled person has a large number of means available for the purpose of decomposing and disposing of chemical and biological contaminants. These vary from relatively inexpensive but relatively slow microbiological decomposition by means of natural bacteria and other micro-organisms to technologically sophisticated, and thereby relatively costly techniques such as reverse osmosis and membrane filtration. The treatment of process water with ozone has also been the focus of attention in recent years (see for example the patent CN 103 535 247 B which describes a method for treating agricultural process water with ozone).

Ozone is an unstable oxygen molecule which spontaneously disintegrates into normal molecular oxygen and an oxygen radical. This latter is an exceptionally strong oxidant with which a range of contaminants dissolved in the water are usually decomposed to atomic level.

For an effective use of a reaction gas such as ozone to decompose dissolved contaminants a high dosage, and preferably an excess, is a prerequisite for bringing about a rapid and effective purification. A drawback thereof is however that it cannot be ruled out in this case that the process water, once it has been treated, is still reactive to greater or lesser extent, and thereby constitutes a hazard to humans and animals and can moreover result in surface deterioration of components of an installation.

The present invention has for its object, among others, to provide a method for treating process water using an oxidizing reaction gas with which the above described hazard to humans, animals and an installation is eliminated or at least reduced to significant extent.

In order to achieve the stated object a method for treating process water of the type described in the preamble has the feature according to the invention that said oxidizing reaction gas comprises ozone, wherein said process water is exposed to ultraviolet radiation after said residence time, in particular to ultraviolet light with a wavelength of about 254 nm, by which a remainder of said oxidizing reaction gas is at least largely decomposed, and wherein said process water is then redirected back to said agricultural installation.

The invention is based here on the insight that by administering the reaction gas in the form of colloidal bubbles, so-called nano-bubbles, the reactivity thereof can be significantly enhanced both in terms of the action thereof as oxidant resulting in an efficient purification of the process water and of a susceptibility thereof to itself being decomposed in the subsequent step. All in all it is hereby possible to suffice with a lower dosage of the reaction gas for the same effectiveness and efficiency, while possibly remaining reaction gas can be decomposed particularly effectively by means of the decomposing means.

The final end product, i.e. the treated water, is particularly found to be largely free of chemicals and other undesirable contaminants, while an installation which is relatively compact and in many cases highly viable commercially will suffice for the purpose. The method according to the invention has the feature that the reaction gas comprises ozone. Ozone can be supplied either in prepared form or be formed on site from oxygen. Ozone as reaction gas provides in both cases the advantage that the oxygen content of the process water will thereby also rise simply because molecular oxygen is a decay product of ozone. An increased oxygen concentration will in some cases provide an improvement in quality of the treated water, particularly in the case of reuse in (glass) horticulture, since this has a positive effect on the development of a root system of a plant. Bubbles can be said to be colloidal when the reaction gas bubbles, instead of escaping directly to the surface of the liquid, remain for a longer period in the liquid. The principle of Archimedes is not therefore wholly applicable here. Depending on the liquid in question, this can be the case with bubbles typically having micro- to nano-dimensions. Not only does the relatively large surface area in relation to the volume of the bubbles and the longer residence time ultimately have a positive effect on the decomposing efficiency thereof, but due to specific physico-chemical interface properties at the surface thereof such colloidal bubbles also provide reaction dynamics in the decomposing process which are wholly individual and as yet not fully understood. This is also ultimately found to enhance the decomposing process described here. Particularly favourable results can be achieved in this respect with a particular embodiment of the method according to the invention characterized in that the colloidal bubbles have an average diameter of between 1 and 1000 nanometres, and in particular an average diameter in the order of 300 nanometres or less.

The eventual neutralization of the reaction gas can be brought about in various ways. This may for instance involve a (strongly) reducing environment for an oxidizing reaction gas or a thermal treatment of the process water, usually warming or heating. The method according to the invention has the feature however that the reducing environment comprises exposure to ultraviolet radiation, in particular ultraviolet light with a wavelength of about 254 nm. In addition to a relatively low energy consumption, such a photochemical decomposition has the great advantage that no additional reaction product(s) will be used up for the purpose, and the process water is not otherwise adversely affected.

For an increased efficiency and efficacy of the decomposition of harmful chemicals, a further preferred embodiment of the method according to the invention is characterized in that said residence time comprises a standing time of the process water during which said process water is held in contact with said reaction gas.

The method according to the invention is advantageously applied in a water purification installation a water purification installation comprising a first reaction space and a second reaction space, spaced therefrom, wherein the first reaction space comprises an inlet for fresh process water and an outlet which is coupled to an inlet of the second reaction space, and comprising a source which is able and configured to supply a reaction gas, wherein mixing means are provided to introduce the reaction gas into the process water in the first reaction space wherein the mixing means are able and configured to introduce the reaction gas in the form of colloidal bubbles into the process water, wherein the second reaction space is provided with decomposing means for decomposing the reaction gas, and wherein the second reaction space is placed downstream of the first reaction space and pump means are provided which are able and configured to carry the process water out of the first reaction space into the second reaction space. The reaction spaces for the successive stages of the process can be physically separated or be provided successively in the same reactor. Preferably, the process water is kept in contact with the colloidal bubbles in the first reaction space for a certain standing time prior to leading the process water to the second reaction space. This increases the efficiency and efficacy of the decomposition of contaminants that are resident in the process water.

An ozone source is applied for the reaction gas in the installation. This can be a prepared supply of ozone, optionally under high pressure, although in a preferred embodiment the source for the reaction gas comprises an ozone generator. Ozone is generated here inside the installation, for instance by converting oxygen to ozone. The source product required for this purpose can be extracted from the ambient air or obtained from a supply provided and maintained for the purpose.

With a view to supplying the reaction gas to the process water flow a further particular embodiment of the installation has the feature that the mixing means are able and configured to form from the reaction gas colloidal bubbles having an average diameter of between 1 and 1000 nanometres, and in particular an average diameter of less than 300 nanometres. Such relatively small gas bubbles are found in practice to make a significant contribution toward a good mixing in the process water and the reaction efficiency.

For the eventual decomposition, and thereby neutralization, of the reaction gas the installation is characterized in a further particular embodiment in that the decomposing means comprise an ultraviolet radiation source to which said process water is being exposed in the second reaction space, ir particular an ultraviolet radiation source which is able and configured to generate ultraviolet radiation with a wavelength in the order of 254 nanometer. The wavelength of the supplied radiation is adapted here to a quantum physical excitation energy level of the O₂-O bonding of ozone, whereby it disintegrates into molecular oxygen in combination with oxygen radicals which join together to form molecular oxygen. Such a photochemical decomposition has the advantage that the process water is hereby not otherwise affected, or hardly so. An additional advantage is that the oxygen formed from ozone enters the process water wholly or partially in the form of colloidal oxygen, whereby the oxygen content of the water is increased, and with the colloidal oxygen bubbles can even rise beyond a saturation limit of normally dissolved oxygen.

The same bond can also be thermally broken by increasing the temperature of the process water (not according to the invention). A further embodiment of the installation not according to the invention has for this purpose the feature that decomposing means comprise heating means which are able and configured to heat the process water in the second reaction vessel, in particular to an increased temperature of between 40 and 60 degrees Celsius. The unstable ozone-oxygen bond can also be broken by introducing mechanical energy into the process water, for instance by shaking or stirring (not according to the invention).

The invention will now be further elucidated on the basis of an exemplary embodiment and an accompanying drawing. In the drawing:

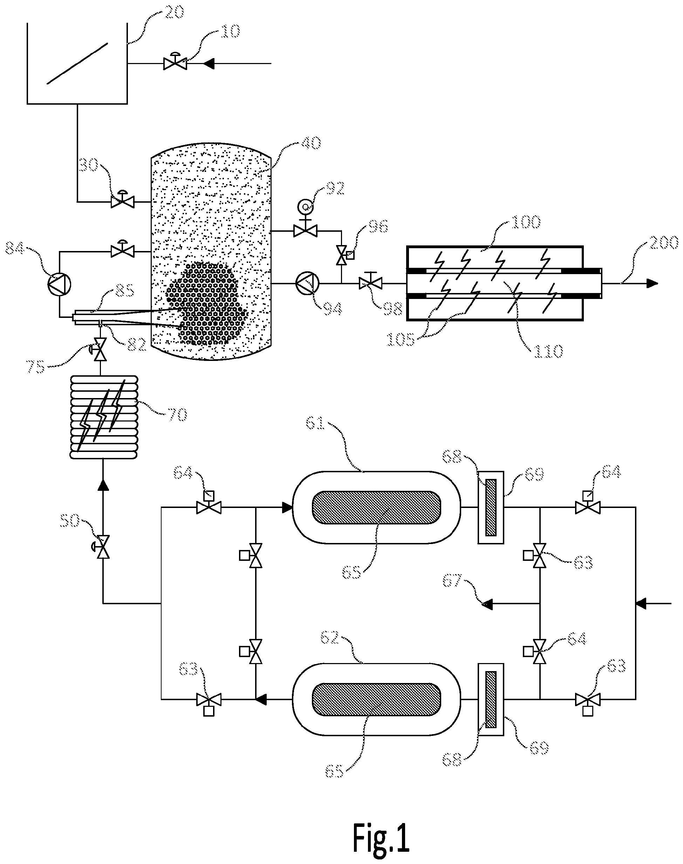

- figure 1: shows schematically a setup of a water purification installation in which an exemplary embodiment of the method according to the invention can be performed.

The figure is otherwise purely schematic and not drawn to scale. Some dimensions in particular may be exaggerated to greater or lesser extent for the sake of clarity. Corresponding parts are designated in the figure with the same reference numeral.

Figure 1 shows schematically an installation with which a water purification can be performed according to the invention. The installation comprises an inlet 10 for as yet untreated, fresh process water which is guided first of all over a sludge filter 20 in order to separate sludge and other solid, undissolved constituents therefrom. The process water with solid constituents thus at least substantially removed is admitted via a valve 30 into a first reaction space of 40 in the form of a reactor vessel. This water may still comprise micro-organisms and dissolved chemical substances, such as for instance plant enhancing means (pesticides and/or fertilizers) such as are frequently applied in (glass) horticulture or agriculture. In addition to residues of fertilizers and plant protection products, these also include for instance bacteria, algae and other harmful substances which can have an adverse effect on the growth process of a plant.

It is desirable that these substances are also removed as far as possible from the process water before draining or reusing the process water on site. For this purpose the installation comprises an ozone treatment system. This system can be fed with a prepared supply of ozone which is for instance held and supplied under high pressure in bottles, although ozone is preferably prepared for the system on site by converting oxygen. Ambient air as well as pure oxygen can be used as supply. In order to obtain substantially pure oxygen from the ambient air an oxygen generator is used in this example to concentrate oxygen from ambient air. Owing to the higher percentage of oxygen a higher concentration of ozone can be produced. The installation required for this purpose is shown schematically and comprises a so-called pressure swing adsorption reactor.

The pressure swing adsorption reactor comprises two separate reaction chambers 61,62. Herein ambient air under increased pressure and oxygen are alternately admitted and released. Present in the reaction chambers is an adsorbent in the form of a zeolite core 65 to which at increased pressure nitrogen bonds in large measure preferentially relative to oxygen. The oxygen concentration hereby rises in the one reactor chamber 61 and can eventually be extracted therefrom as substantially pure oxygen. The other reaction chamber 62 is simultaneously opened and thereby brought to atmospheric pressure so that nitrogen previously bonded therein is released and can escape at an outlet 67. By means of a system of valves 63,64 this process can be reversed and repeated so that a continuous production of air enriched with concentrated oxygen can be drawn off at an outlet 50. Valves 63,64 are alternately opened and closed here in groupwise manner.

Zeolite core 65 is not consumed during the separation, whereby the oxygen separation takes place in fully regenerative manner. Zeolite is nevertheless sensitive to moisture and after a period of time the core can therefore lose its action if it has been exposed to water (vapour). In order to prevent this an air dryer 69 is applied in this example upstream of the pressure swing adsorption reactor 61,62. Present herein is a hygroscopic bed 68 of a suitable water absorber, such as a hygroscopic salt such as aluminium oxide, calcium chloride or sodium silicate (silica gel) to which water binds irreversibly. This bed is refreshed before it is fully saturated so that the air which escapes therefrom is at least substantially free of water (vapour) and the zeolite core is thus protected from deterioration.

The oxygen production of the pressure swing adsorption reactor 60 is guided via a valve 50 provided for the purpose to an ozone generator 70. Ozone can be generated artificially in accordance with the same principle as occurs in nature, that is by means of UV light (such as in the ozone layer) or via corona discharge (high voltages as in the case of a thunderstorm). In both methods this means that the bond between the oxygen atoms is broken. This creates oxygen radicals which bond to the oxygen atom to form O₃. Corona discharge is applied in this example for the production of ozone because of the advantages of this method, such as the greater durability of the installation and the lower cost of ozone production.

Ozone generator 70 comprises for this purpose an electrostatic plasma reactor with electrodes between which a high voltage is applied in order to thus bring about a corona discharge. In the plasma arc which is thus generated and maintained oxygen is continuously converted to ozone which is released as gas at an exit 75. Because of the enriched oxygen intake by plasma reactor 70 from pressure swing adsorption reactor 60 a relatively high ozone conversion efficiency and ozone generation capacity can thus be realized.

Ozone is a trioxygen compound (O₃) which is not very stable and disintegrates spontaneously into molecular oxygen (O₂) and a free oxygen radical (O⁻). This latter in particular is an exceptionally strong oxidant which decomposes for instance organic compounds in effective manner to atomic level to form harmless components such as carbon dioxide and water. Use is advantageously made of this action in the described installation for the purpose of purifying the process water in reaction vessel 40. The quantity of ozone produced by ozone generator 70 is guided via a valve 75 to mixing means 80 with which ozone is introduced into the process water in first reaction space 40.

Applied according to the invention in order to increase the effectiveness of the ozone in reactor vessel 40 are mixing means 80 which are able and configured to introduce the formed ozone in the form of colloidal bubbles, also referred to as nanobubbles or ultra-fine bubbles, into the process water. These are nanoscopic gaseous cavities in the aqueous solution with the capability of changing the normal characteristics of water. Such nanoscopic bubbles have an increased zeta potential at their interface with the liquid, which is found to result in an increased and differing reactivity.

Normal bubbles have a diameter varying between one micron and larger. These rise quickly to the surface of the liquid and burst. Nanobubbles on the other hand typically have a size of less than 1000 nanometres and in this example are on average even less than 300 nanometres in diameter. These ultra-small bubbles are hereby susceptible to Brownian motion in the water, whereby the bubbles drift randomly through the water and can remain in the liquid for a long period. This longevity, together with a greatly increased reactivity at the bubble surface and the applied excess of ozone, results in an exceptionally effective treatment of the process water.

Different techniques can be applied per se to form nanobubbles from ozone. Ozone gas can thus be pressed through a nanomembrane in order to force nanobubbles therefrom, or bubbles can be formed in mechanical manner using a rotor. Use is however made in this example of a venturi tube 85 with a side inlet 82 for ozone. Using a pump 84 provided for the purpose process water is pumped at high speed through venturi tube 85, whereby ozone provided at the inlet is entrained therein in the form of ultra-fine nanobubbles and dispersed in this form in reaction vessel 40. It has been found that a high bubble capacity can thus be achieved with a high degree of uniformity of the formed nanobubbles. The ozone bubbles of this example have an average diameter of about 300 nanometres or less. This produces an aqueous colloidal dispersion of ozone in the process water which is particularly powerful in terms of an efficient water purification.

The process water is kept in circulation with a circulation pump 94 which produces a low speed but a high pump flow rate. By means of a set of valves 96,98 the process water is circulated and the quality of the thus treated process water is measured continuously with a sensor 92. In the case of obstinate contamination this purification step can if desired be supported by simultaneously exposing the process water to UV radiation of 254 nm wavelength, particularly in order to kill micro-organisms therein.

As soon as the quality of the process water has reached a predetermined value, it is guided via valve system 96,98 to a second reaction space 100. This second reaction space has the purpose of decomposing ozone still present in the process water. The second reaction space comprises for this purpose a transparent reaction tube 110 through which the process water is guided while it is exposed to UV radiation 105 with a wavelength of 254 nm. This wavelength is adapted to an excitation level of the O₂-O⁻bond in ozone which is broken effectively thereby while forming mainly only molecular oxygen. The process water is hereby eventually enriched with oxygen, but more importantly is completely free of ozone, before it is supplied to an exit 200 of the system for reuse or discharge to a sewer or to the surface water.

Although the invention has been further elucidated above on the basis of only a single exemplary embodiment, it will be apparent that the invention is by no means limited thereto. On the contrary, many variations and embodiments are still possible within the scope of the invention for a person with ordinary skill in the art.

The invention can thus be applied not only for discharge water from for instance a (glass) horticulture installation, but the invention can advantageously also be applied inside the installation for the purpose of for instance real-time (online) inline monitoring of algae and bacteria in agricultural process water.

When a content thereof threatens to exceed a determined acceptable value, the above described process can be implemented in an intermediate stage of the installation in order to improve the process water quality.

## Claims

1. Method for treating agricultural process water, wherein said process water is drained from an agricultural installation, wherein said drained process water is exposed during a residence time to an excess of an oxidizing reaction gas in the form of colloidal bubbles that are introduced into said process water for the purpose of decomposing waste products present therein, wherein said oxidizing reaction gas comprises ozone, wherein said process water is exposed to ultraviolet radiation after said residence time, in particular to ultraviolet light with a wavelength of about 254 nm, by which a remainder of said oxidizing reaction gas is at least largely decomposed, and wherein said process water is then redirected back to said agricultural installation.

2. Method as claimed in claim 1, **characterized in that** the colloidal bubbles have an average diameter of between 1 and 1000 nanometres, and in particular an average diameter in the order of 300 nanometres or less.

3. Method according to claim 1 or 2, **characterized in that** said residence time comprises a standing time of the process water during which said process water is held in contact with said reaction gas.

## Patentansprüche

1. Verfahren zur Aufbereitung von landwirtschaftlichem Prozesswasser, wobei das genannte Prozesswasser aus einer landwirtschaftlichen Anlage abgelassen wird, wobei das genannte abgelassene Prozesswasser für eine Verweilzeit einem Überschuss von oxidierendem Reaktionsgas in der Form von kolloidalen Blasen ausgesetzt wird, die in das genannte Prozesswasser eingeleitet werden, für den Zweck Abfallprodukte, die darin enthalten sind, zu zersetzen, wobei das oxidierende Reaktionsgas Ozon umfasst, wobei das genannte Prozesswasser ultravioletter Strahlung nach der genannten Verweilzeit ausgesetzt wird, insbesondere ultraviolettem Licht mit einer Wellenlänge von rund 254 nm, wodurch ein verbleibender Anteil des genannten oxidierenden Reaktionsgases zumindest im Wesentlichen zersetzt wird, und wobei das genannte Prozesswasser der genannten landwirtschaftlichen Anlage dann zurückgeführt wird.

2. Verfahren wie im Anspruch 1 beansprucht, **dadurch gekennzeichnet, dass** die kolloidalen Blasen einen mittleren Durchmesser von zwischen 1 und 1000 Nanometer aufweisen, und insbesondere einen mittleren Durchmesser in der Größenordnung von 300 Nanometer oder weniger.

3. Verfahren gemäß Anspruch 1 oder 2, **dadurch gekennzeichnet, dass** die genannte Verweilzeit eine Standzeit des Prozesswassers umfasst, während welcher das Prozesswasser im Kontakt mit dem genannten Reaktionsgas gehalten wird.

## Revendications

1. Méthode pour traiter l'eau issue de processus agricoles, ladite eau issue de processus agricoles étant drainée depuis une installation agricole, ladite eau issue de processus agricoles drainée étant exposée pendant une période de rétention à du gaz à réaction d'oxydation en surabondance sous forme de bulles colloïdales qui sont introduites dans ladite eau issues de processus agricoles dans le but de décomposer les déchets qu'elle contient, ledit gaz à réaction d'oxydation comprenant de l'ozone, ladite eau issue de processus agricoles étant exposée à des rayons ultraviolets à la suite de ladite période de rétention, en particulier à une lumière ultraviolette présentant une longueur d'ondes d'environ 254 nm, par laquelle ce qui reste du gaz à réaction d'oxydation est au moins largement décomposé, et ladite eau issue de processus agricoles étant alors redirigée vers ladite installation agricole.

2. Méthode selon la revendication 1, **se caractérisant en ce que** les bulles colloïdales présentent un diamètre moyen se situant entre 1 et 1000 nanomètres, et en particulier un diamètre moyen de l'ordre de 300 nanomètres ou moins.

3. Méthode suivant la revendication 1 ou 2, **se caractérisant en ce que** ladite période de rétention comprend un temps de repos de l'eau issue de processus agricoles pendant lequel ladite eau provenant de processus agricoles est maintenue en contact avec ledit gaz à réaction.
